Europäisches Patentamt

European Patent Office

Office européen des brevets

(11) Veröffentlichungsnummer: **0 271 038 B1**

# EUROPÄISCHE PATENTSCHRIFT

(45) Veröffentlichungstag der Patentschrift:
08.08.90

(51) Int. Cl.⁵: **B60B 7/06**

(21) Anmeldenummer: **87118035.2**

(22) Anmeldetag: **05.12.87**

(54) **Halterung für eine Radkappe eines Fahrzeuges.**

(30) Priorität: **11.12.86 DE 3642268**

(43) Veröffentlichungstag der Anmeldung:
**15.06.88 Patentblatt 88/24**

(45) Bekanntmachung des Hinweises auf die Patenterteilung:
**08.08.90 Patentblatt 90/32**

(84) Benannte Vertragsstaaten:
**BE DE IT NL SE**

(56) Entgegenhaltungen:
**DE-A- 3 505 843**
**DE-A- 3 543 772**
**FR-A- 2 166 016**
**US-A- 4 241 954**
**US-A- 4 346 940**

(73) Patentinhaber: **Emil Ziegler Metallwarenfabrik GmbH &
Co. KG, Stuttgarter Strasse 79,
D-7313 Reichenbach/Fils(DE)**

(72) Erfinder: **Würschum, Erich, Im Kapf 2,
D-7302 Ostfildern 1(DE)**

(74) Vertreter: **Jackisch, Walter, Dipl.-Ing. et al,
Menzelstrasse 40, D-7000 Stuttgart 1(DE)**

## Beschreibung

Die Erfindung betrifft eine Halterung für eine Radkappe mit den Merkmalen des Gattungsbegriffes des Anspruches 1. Eine derartige Halterung ist der DE-A1 3 505 843 zu entnehmen.

Bei Fahrzeugen, insbesondere Omnibussen, sind Halterungen für Radkappen bekannt, die Stehbolzen an den Felgen der Fahrzeugräder aufweisen, welche durch Bohrungen der Radkappe hindurchgesteckt werden und nach Aufschrauben von Muttern die Radkappe haltern. Da die Bohrungen in den Radkappen toleranzbedingt einen größeren Durchmesser als die Stehbolzen haben, besteht zwischen Radkappe und Felge ein unvermeidliches Spiel, durch welches nach dem Festschrauben der Stehbolzenmuttern am Umfang der verhältnismäßig großen Radkappe eine oftmals sichtbare Unwucht auftritt. Am Umfang der Radkappe befinden sich außerdem Distanzklötze, die an dem abstrebenden Felgenhorn der Radfelge abgestützt sind und durch welche die Unwucht zusätzlich vergrößert wird, zumal die Radkappe in ihrem äußeren Umfangsbereich leicht verformbar ist und jede noch so geringe Radkappenverformung zu einer Unwucht führt.

Aufgabe der Erfindung ist es, eine Halterung für eine Radkappe gemäß Oberbegriff des Anspruches 1 dahingehend weiterzubilden, daß mit einfachen Mitteln eine genau zentrierte, weitgehend unwuchtfreie Radkappenbefestigung ermöglicht wird, die zudem kostengünstig herstellbar, einfach montierbar und insbesondere auch für Zwillingsräder geeignet ist.

Erfindungsgemäß wird diese Aufgabe bei einer Halterung für Radkappen der eingangs erwähnten Art mit den Merkmalen des Kennzeichens des Anspruches 1 gelöst.

Weitere zweckmäßige Ausgestaltungen und Weiterbildungen wesentlicher Einzelheiten der Erfindung sind den Merkmalen der Unteransprüche zu entnehmen. Die Zeichnungen zeigen in schematischer Darstellung eine bevorzugte Ausführungsform der Erfindung. Es zeigen:

Fig. 1 eine Radkappe mit der erfindungsgemäßen Halterung in Ansicht auf die der Radfelge zugewandte Innenseite,

Fig. 2 die Radkappe mit Halterung gemäß Schnitt II-II der Fig. 1,

Fig. 3 einen Teilschnitt durch ein Fahrzeugrad mit Felge und Radkappe gemäß Fig. 1 und 2 in einer gegenüber diesen Figuren vergrößerten Darstellung,

Fig. 4 einen Teilausschnitt aus einer Radkappe in einer Ansicht, ähnlich der Fig. 1, mit geöffneter Halterung zum Befestigen an der Radfelge und

Fig. 5 eine Teilansicht der Radkappe gemäß Fig. 4 mit der Halterung im montierten Zustand der Radkappe (gesperrter Klemmstellung).

Die in den Zeichnungen dargestellte Ausführung einer Radkappe 1 mit Halterung ist insbesondere für Omnibusse oder ähnliche Fahrzeuge vorgesehen, deren Fahrzeugräder einen verhältnismäßig großen Durchmesser aufweisen (Felgendurchmesser beispielsweise 500 oder 600 mm und mehr). Die eigentliche Radkappe 1 kann aus Metall, vorzugsweise jedoch aus Kunststoff, bestehen und hat etwa die Form einer Schüssel mit einem Boden 4 und einer sich nach außen anschließenden gewölbten Umfangswandung 5 und einem Außenrand (Schüsselrand) 6.

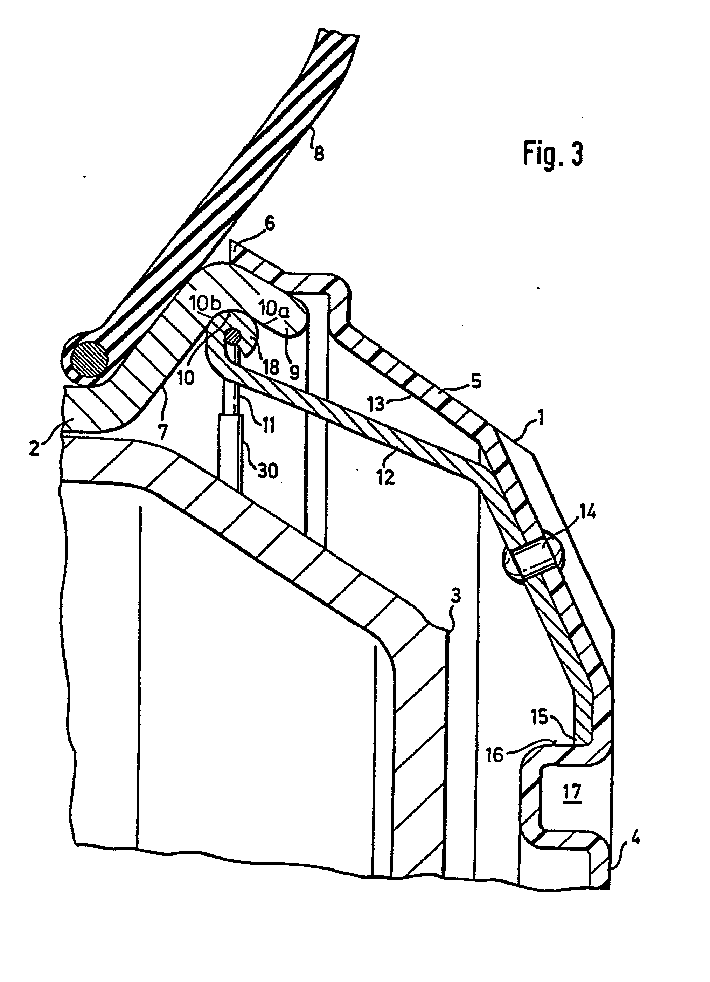

Die Felge 2 des Fahrzeugrades 3 weist ein Felgenbett 7 auf, in dem ein luftgefüllter, gummielastischer Reifen 8 gelagert ist (Fig. 3). Das Felgenbett 7 weist am äußeren Rand ein sogenanntes Felgenhorn 9 auf, das zur Radachse hin abgebogen ist, derart, daß zwischen Felgenbett 7 und Felgenhorn 9 eine zur Radachse hin offene, konkave Rinne 10 gebildet ist.

Das Ausführungsbeispiel zeigt, daß an der Radkappe 1 ein Haltering 11 angeordnet ist, der zweckmäßig als ein offener, also aufspreizbarer Ring ausgeführt ist. Er kann aus einem etwa 4 bis 8 mm, vorzugsweise 6 mm, dicken Runddraht bestehen. Der Haltering 11 ist vorteilhaft etwa in der Ebene des Außenrandes 6 der Radkappe 1 vorgesehen. Beim dargestellten Ausführungsbeispiel liegt der Haltering 11 etwas vor dieser Ebene, steht also über den Außenrand 6 etwas vor und weist einen Durchmesser auf, der nur wenig kleiner ist als der Durchmesser des Außenrandes 6.

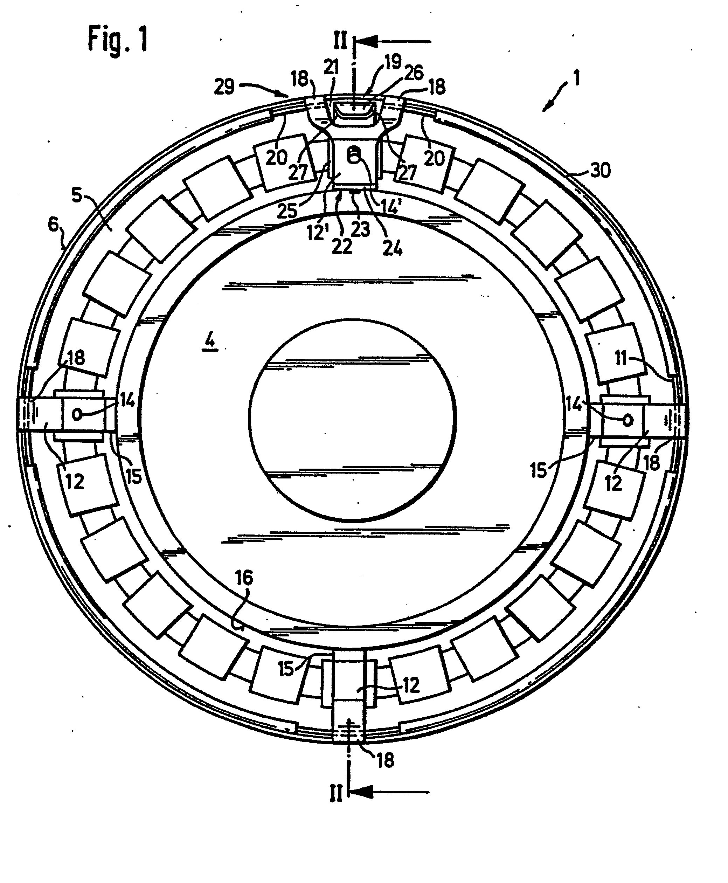

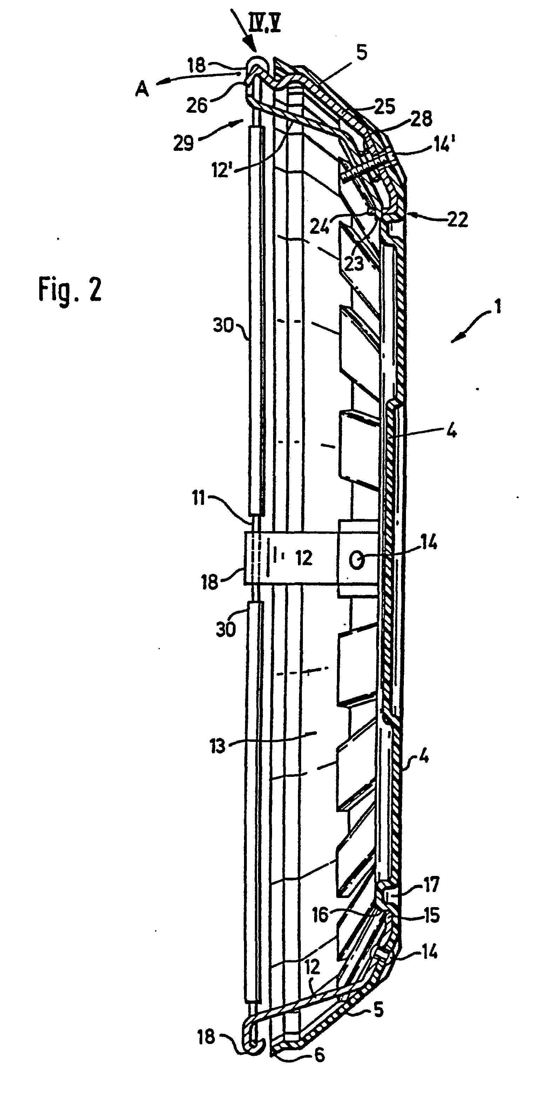

Der Haltering 11 bildet somit einen Halteteil, der an der Radkappe 1 gelagert ist; hierzu dienen Haltebügel 12, 12', die an der Innenseite 13 der Umfangswand 5 durch bolzenförmige Befestigungsteile 14, 14' gehaltert sind. Die Befestigungsteile 14 (vgl. Fig. 1 und 3) werden durch Nieten und der Befestigungsteil 14' wird durch eine verstellbare Schraube 14' gebildet. Um eine gleichmäßige und zentrische sowie stabile Lagerung der Radkappe mit Haltering 11 zu gewährleisten, sind mehrere gleichmäßig über den Radkappenumfang verteilte Haltebügel 12, 12' vorgesehen. Beispielsweise können drei, vier oder mehr gleichmäßig verteilte Haltebügel 12, 12' an der Radkappe 1 gehaltert sein. Um die Haltebügel 12, 12' an der Radkappe 1 sicher zu haltern und auf die Radkappe wirkende Kräfte günstig aufzunehmen, ist es vorteilhaft, den in Richtung zur Achse weisenden einen Endteil, also den Endabschnitt enes Haltebügels 12, 12', auf ener Schulter 16 der Radkappe abzustützen. Diese kann als Teil einer Wandung einer im Boden 5 der Radkappe ausgebildeten Umfangsrinne 17 ausgeführt sein. Wie aus Fig. 1 ersichtlich, sind die drei Haltebügel 12 mittels der Niete 14 starr an der Radkappe befestigt (vgl. auch Fig. 3). Demgegenüber ist der Haltebügel 12' beweglich, nämlich in Richtung einer Radialebene, entsprechend Pfeil A in Fig. 2 ausgebildet. Die Teile 11, 12 und 12' bilden somit eine Halterung der Radkappe, die infolge der bewegbaren Ausbildung des Bügels 12' und infolge der Abstützung durch die starren, am Radkappenumfang gleichmäßig verteilt angeordneten Haltebügel 12 zur Befestigung der Radkappe am Fahrzeugrad dienen, indem diese Halterung 11, 12, 12' zur Montage der Radkappe 1 in die Felgenhornrinne 10 eingeführt und dort fest gegen deren Wandungen 10a, 10b angedrückt werden. Hierzu weist der an der Radkappe 1 gehalterte, bewegliche Bügel 12' den Halter 18 und den Haltering 11, beides also Halteelemente, auf, die in der Montagestellung fest gegen die Wandungen 10a, 10b der Felgenhorn-rinne geklemmt werden können, weil dieser bewegbare Haltebügel 12′ in einem Schwenklager 22, das an der Radkappe vorgesehen ist, schwenkbar gelagert und durch eine Feder 28, beispielsweise eine Schraubenfeder oder ein Gummielement, abgestützt ist. Dabei ist das Halteelement, also der Haltering 11 und der Halter 18, an dem dem Schwenklager 22 gegenüberliegenden Ende des bewegbaren Haltebügels 12′ angeordnet. Der Bügel 12′ selbst ist durch eine in Fig. 2 deutlich eingezeichnete, verstellbare Schraube 28, deren Schraubenkopf auf der Außenseite der Radkappe liegt und die durch ein Gewinde des Verstellbügels und durch eine Feder 28 hindurchgreift, in eine Löse- und Montagestellung einstellbar.

Bei der als Ausführungsbeispiel dargestellten Halterung ist der aufweitbare Haltering 11 vorgesehen, dessen Durchmesser zum Einsetzen in die Felgenhornrinne 10 verkleinert und zum Festspannen in dieser Rinne vergrößert werden kann. Der federnd ausgebildete Haltering kann somit in seinem Durchmesser zur Montage und zur Demontage der Radkappe in der Rinne des Felgenhornes verändert werden. Für diese bewegliche Lagerung des im Durchmesser veränderbaren Halteringes 11 kann dieser in einem als Öse oder Hülse ausgebildeten Halter 18 positioniert sein, die an dem im Schwenklager 22 des beweglichen Drahtbügels 12 gegenüberliegenden Ende angeordnet und zweckmäßig mit diesem einstückig ausgebildet ist. Damit der Haltering 11 zum Einsetzen in die konkave Felgenhornrinne 10 zusammengedrückt und somit im Durchmesser verringert werden kann, damit er in die Felgenhornrinne 10 hineingeführt werden kann, ist dieser Haltering, wie schon erwähnt, als offener, aufweitbarer Ring ausgebildet, der also eine Öffnung 19 hat, die beispielsweise durch Ausschneiden eines Radstückes aus einem geschlossenen Ring herstellbar ist. Die Länge dieser Öffnung 19 kann beispielsweise etwa 1 oder mehrere cm betragen. Begrenzt wird die Öffnung 19 durch die sich gegnüberliegenden Stirnflächen der Drahtenden 20. Selbstverständlich kann die Öffnung 19 des Halteringes 11 auch in anderer Weise hergestellt werden, beispielsweise dadurch, daß der Halteringdraht in Form einer Öse, ähnlich einem Dehnungsbogen bzw. einem Längenausgleichsbogen, über Fernrohrleitungen seitlich hinausgebogen wird, derart, daß der Haltering als ein geschlossener, endloser Ring ausführbar ist.

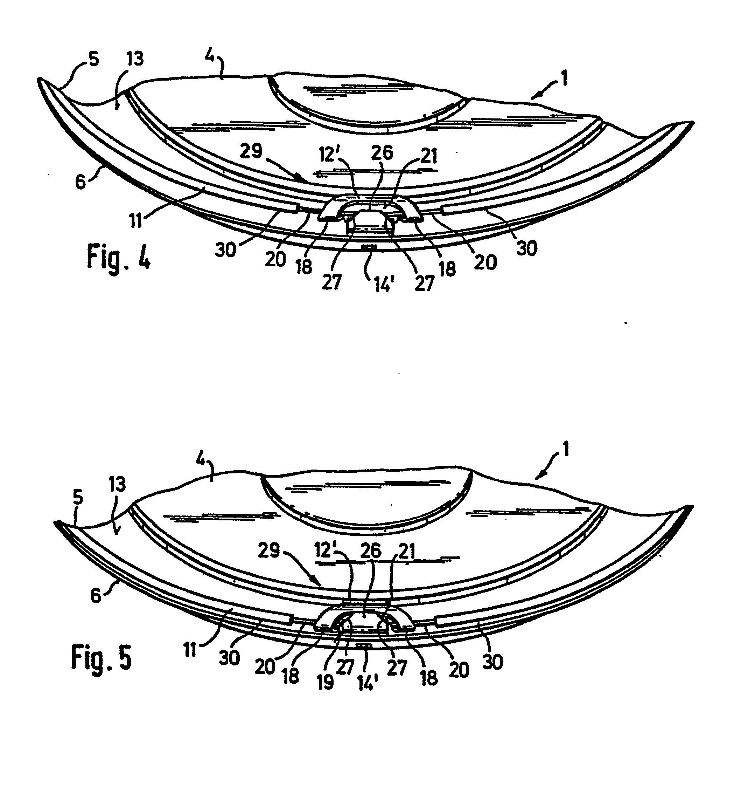

Die Fig. 1, 4 und 5 zeigen, daß die Drahtenden 20 des Halteringes 11 jeweils in einem Halter 18 gelagert und in diesem geführt sind, wobei Halter 18 und bewegbarer Haltebügel 12′ etwa gabelförmig ausgebildet sind. Die die Gabelform mitbestimmende Ausnehmung 21 zwischen den beiden Halteteilen 18 des Haltebügels 12′ entspricht etwa der Größe der Öffnung 19, also der Abstandes der Drahtenden 20 voneinander. Das Schwenklager 22 des Haltebügels 12′ kann aus einer am Bügel 12′ ausgebildeten Nase 23 bestehen, die in einem Stützsteg 24 einer Lasche 25 eingreift. Die Lasche 25 befindet sich an der Innenseite der Umfangswandung 5 und wird von der Gewindeschraube 14′ durchsetzt. An dem dem Schwenklager 22 abgewandten oberen freien Endbereich weist die Lasche 25 einen Sperriegel 26 auf, der in einem spitzen Winkel hakenförmig so abgebildet ist, daß er in die Öffnung 19 und die Ausnehmung 21 hineinragt. Der Sperriegel 26 kann etwa trapezförmig ausgebildet und sich in Richtung zum freien Ende hin verjüngend ausgeführt sein. An gegenüberliegenden Seiten ist je eine Schrägfläche 27 vorgesehen, gegen welche die Enden 20 des Halteringes 11 anliegen. Die Schraube 14, die von Außen über einen vorzugsweise als Innensechskant ausgeführten Schraubenkopf gedreht werden kann, durchsetzt also die Wandung 5, die Lasche 25 und ein zwischen bewegbarem Haltebügel 12′ und Lasche 25 liegendes Federelement, beispielsweise ein Schraubenfeder 28 oder dgl., und greift in das Gewinde des Haltebügels 12′ ein. Die Feder 28 kann eine Schraubenfeder, Blattfeder oder ein gummielastischer Druckkörper sein und bewirkt, daß der bewegliche Haltebügel 12′ mit einer Federkraft beaufschlagt wird, die bestrebt ist, diesen Haltebügel 12′ so nach innen zu schwenken, daß der an seinem freien Ende befindliche Halteteil, nämlich der Haltering 11, in den Haltern 18 gehalten wird, zwangläufig im Durchmesser verkleinert wird, indem sich der Öffnungsabstand zwischen den Drahtenden 20 verringert. Hierbei können die Drahtenden 20 an den Schrägflächen 27 des Sperriegels 20 entlag gleiten.

Der für die beiden Drahtenden 20 haltende, schwenkbare Tragbügel 12′ und der an der Lasche 25 ausgebildete Sperriegel 26 bilden zusammen mit der Gewindeschraube 14 und dem Federelement 28 ein Schloß 29, das für die Montage der Radkappe an der Felge 2 geöffnet und nach der Montage der Radkappe an der Felge 2 wieder verriegelt werden kann. Zur Erzielung einer sicheren Anlage dieser Halterungsteile an den Wandungen 10a, 10b der Felgenhornrinne 10 im Montagezustand und zur Vermeidung von Reibgeräuschen zwischen Haltering 11 und den Wandungen 10a, 10b bei Drehung des Rades kann der Haltering 11 zweckmäßig mit einer Schutzhülle 30 versehen sein, die vorzugsweise als auf den Halteringdraht aufgeschobener Kunststoffschlauch ausgeführt ist und beispielsweise eine Wanddicke von 0,5 bis 2 mm hat. Den Fig. 1 und 2 ist zu entnehmen, daß die Schutzhülle 30 im Umfangsbereich des Halteringes 11 zwischen je zwei starren Haltebügeln 12 vorgesehen ist und im Bereich der Halter 18 nicht besteht, so daß der Haltering 11 in diesen behinderungsfrei beweglich ist.

Der Haltering 11 ist somit bei verriegeltem Schloß 19 im wesentlichen steif und starr, so daß eine ungewollte Verformung der aus Kunststoff oder dünnem Metallblech hergestellten Radkappe im montierten Zustand nicht auftreten kann. Damit wird erreicht, daß beispielsweise beim Fahren an Straßenkanten oder anderen Hindernissen die Radkappe 1 aufgrund der Halteringzentrierung sich nicht ungewollt verformen und von der Felge 2 abspringen kann, sondern fest auf der Felge 2 bleibt.

Zum Befestigen der Radkappe 1 an der Felge 2 wird die Gewindeschraube 14 des beweglichen Haltebügels 12′ durch Drehen gelöst (Fig. 2). Dabei drückt die Feder 28 die schwenkbar gelagerten Haltebügel 12′ etwas radial in Richtung zur Radachse, so daß der Haltering 11 im Durch messer zwangsweise etwas zusammengedrückt wird, somit eine Durchmesserverkleinerung eintritt, und die Öffnung 19 zwischen den Drahtenden 20 kleiner wird. Die Radkappe 1 kann nunmehr an dem äußersten Umfangsrand des Felgenhornes 9 vorbei auf die Felge 2 aufgebracht werden, wobei der Außenrand 6 der Radkappe das Felgenhorn 9 hintergreift (Fig. 3) und der Haltering 11 in den Öffnungsbereich der konkaven Felgenhornrinne 10 gelangt. Durch Anziehen der Gewindeschraube 14 wird der schwenkbare Haltebügel 12' gegen die Kraft der Feder 28 radial in Richtung nach außen verlagert, wodurch die Drahtenden 20 in den Halterungen 18 auseinandergedrückt werden und der Abstand der sich gegenüberliegenden Enden größer, die Öffnung 19 also ebenfalls vergrößert wird. Dabei wird auch der Durchmesser des Halteringes 11 vergrößert, der somit immer tiefer in die konkave Rinne 10 des Felgenhornes eingreift und schließlich an den Wandungen 10a, 10b, also im Grund dieser Rinne 10, zur Anlage kommt. Wenn die Schraube 14' angezogen ist, ist zugleich das Schloß 19 verriegelt, wobei der in die Öffnung 19 eingreifende Sperriegel 26 ein Zusammendrücken des Halteringes 11 verhindert, so daß auch bei großen angreifenden Kräften ein sicherer Befestigungshalt und ein einwandfreier Rundlauf der Radkappe 1 gewährleistet und ein unbeabsichtigtes Lösen vermieden ist.

## Patentansprüche

1. Halterung für eine Radkappe (1) eines Fahrzeuges, insbesondere Omnibusses, die an einer einen gummielastischen Reifen (8) tragenden Felge (2) lösbar zu befestigen ist, und deren Felgenbett (7) ein zur Radachse hin abgebogenes Felgenhorn (9) aufweist, derart, daß zwischen Felgenbett (7) und Felgenhorn (9) eine zur Radachse offene Rinne (10) gebildet ist, dadurch gekennzeichnet, daß die Halterung (11, 12, 12') zur Montage der Radkappe (1) fest gegen die Wandungen (10a, 10b) der Felgenhornrinne anlegbar ist.

2. Halterung nach Anspruch 1, dadurch gekennzeichnet, daß sie einen an der Radkappe (1) gehaltenen, bewegbaren Bügel (12') aufweist, der in der Montagestellung ein Halteelement (18, 11) der Halterung fest gegen die Wandungen (10a, 10b) der Felgenhornrinne (10) klemmt.

3. Halterung nach Anspruch 1 oder 2, dadurch gekennzeichnet, daß der bewegbare Haltebügel (12') um ein an der Radkappe (1) befindliches Schwenklager (22) schwenkbar ist.

4. Radkappe nach Anspruch 3, dadurch gekennzeichnet, daß das Schwenklager (22) des Schwenkbügels (12') durch Abstützung eines Endteiles (15) des Haltebügels (12') an einer Schulter (16) der Radkappenwandung (5) gebildet ist.

5. Halterung nach einem der Ansprüche 1 bis 4, dadurch gekennzeichnet, daß der bewegbare Haltebügel (12') durch eine Feder (28) abgestützt ist.

6. Halterung nach einem der Ansprüche 3 bis 5, dadurch gekennzeichnet, daß das Halteelement (18, 11) an dem dem Schwenklager (22) gegenüberliegenden Ende des bewegbaren Haltebügels (12') angeordnet ist.

7. Halterung nach einem der Ansprüche 1 bis 6, dadurch gekennzeichnet, daß der bewegbare Haltebügel (12') mittels eines Befestigungsteiles (14'), vorzugsweise einer Schraube, lös- und feststellbar ist.

8. Halterung nach einem der Ansprüche 1 bis 7, dadurch gekennzeichnet, daß sie außer dem bewegbaren Haltebügel (12') starre Haltebügel (12) aufweist, und daß sämtliche Haltebügel (12, 12') gleichmäßig über den Umfang der Radkappe (1) verteilt angeordnet sind.

9. Halterung nach einem der Ansprüche 1 bis 8, dadurch gekennzeichnet, daß das Halteelement (18, 11) einen Haltering (11) aufweist, dessen Durchmesser zum Einsetzen in die Felgenhornrinne (10) verringerbar ist.

10. Halterung nach einem der Ansprüche 5 bis 9, dadurch gekennzeichnet, daß der Haltering (11) als offener, aufweitbarer Ring (11) ausgebildet ist, der in der Klemmstellung in der Rinne (10) gegen unbeabsichtigte Durchmesserverringerung (Zusammendrücken) verriegelbar ist.

11. Halterung nach einem der Ansprüche 1 bis 10, dadurch gekennzeichnet, daß der Haltering (11) im Durchmesser etwa gleich oder kleiner ist als der Radkappenaußenrand (6) und vor oder etwa in dessen Ebene gelagert ist.

12. Halterung nach einem der Ansprüche 1 bis 11, dadurch gekennzeichnet, daß der Haltering (11) in einem vorzugsweise hülsen- oder ösenförmigen Halter (18) bewegbar gelagert ist, der an dem an der Radkappeninnenseite (13) vorgesehenen Haltebügel (12, 12') angeordnet ist.

13. Halterung nach einem der Ansprüche 1 bis 10, dadurch gekennzeichnet, daß zur Verriegelung des Halteringes (11) ein Schloß (29) vorgesehen ist, das einen in die Öffnung (19) des Halteringes (11) eingreifenden Sperriegel (26) aufweist.

## Claims

1. Mounting for a hub cap (1) of a vehicle, in particular of a bus, which is to be fastened detachably to a rim (2) supporting a resilient rubber tyre (8), and whereof the rim well (7) comprises a clinch (9) bent towards the wheel axle such that formed between the rim well (7) and clinch (9) is a channel (10) open towards the wheel axle, against the walls (10a, 10b) of which the mounting (11, 12, 12') for the fitting of the hub cap (1) is pressed, the mounting comprising a retainer ring (11) attached to the wheel hub (1) by retaining clips (12, 12') distributed over the periphery, the diameter of which retainer ring is variable when attaching the hub cap (1), characterised in that the retainer ring (11) is constructed as an open, expansible ring (11), which in a clamping position bears against the wall (10a, 10b) of the clinch ring (10) and can be locked by a lock (29) to prevent accidental reduction of diameter (compression), which lock comprises a locking bolt (26) engaging in the opening (19) between two ends (20) of the retainer ring (11), which locking bolt (26) comprises at least one inclined surface (27) co-operating with the ends (20) of the retainer ring (11).

2. Mounting according to Claim 1, characterised in that the retainer ring (11) is slideably mounted in a preferably sleeve-shaped or eyelet-shaped holder (18), which is located on the retaining clip (12, 12').

3. Mounting according to Claim 1 or 2, characterised in that the ends (20) of the retainer ring (11) are able to slide in the holder (18) of a clip (12') mounted on the hub cap (12') the clip being able to tilt about a swivel bearing (22) located on the hub cap (1).

4. Hub cap according to Claim 3, characterised in that the swivel bearing (22) of the retaining clip (12') is formed by supporting an end part (15) of the retaining clip (12') on a shoulder (16) of the hub cap wall (5).

5. Mounting according to one of Claims 1 to 4, characterised in that the movable retaining clip (12') is supported by a spring (28).

6. Mounting according to one of Claims 3 to 5, characterised in that the holder (18) is located at the end of the movable retaining clip (12') lying opposite the swivel bearing (22).

7. Mounting according to one of Claims 1 to 6, characterised in that the movable retaining clip (12') can be released and fixed in position by means of a fastening part (14'), preferably a screw.

8. Mounting according to one of Claims 1 to 7, characterised in that the locking bolt (26) is provided on a cover plate (25) attached to the hub cap wall (5).

9. Mounting according to one of Claims 1 to 8, characterised in that the locking bolt has a wedge-shaped construction.

10. Mounting according to one of Claims 5 to 9, characterised in that the spring (28) is located between the cover plate (25) and the tiltable retaining clip (12') and passing through the spring is the fastening part (14') which engages in a thread in the retaining clip (12').

11. Mounting according to one of Claims 1 to 10, characterised in that the retainer ring (11) has approximately the same or a smaller diameter than the outer edge (6) of the hub cap and is mounted in front of or approximately in the plane thereof.

12. Mounting according to one of Claims 1 to 11, characterised in that the retainer ring (11) has a protective sheath (30) preferably constructed in the form of tubing.

13. Mounting according to one of Claims 1 to 12, characterised by a construction of the mounting (11, 12, 12'), in which the hub cap (1) consisting of synthetic material or thin sheet metal is reinforced against elastic deformation in a clamped position in the clinch channel (10).

## Revendications

1. Fixation pour un enjoliveur de roue (1) d'un véhicule, en particulier des autobus ou des autocars, qui peut être montée de manière amovible sur une jante (2) portant un pneumatique (8) élastique et dont la base de jante (7) comprend une corne de jante (9) coudée en direction de l'axe de roue de façon à former entre la base de jante (7) et la corne de jante (9) une gorge (10) ouverte en direction de l'axe de roue, contre les parois (10a, 10b) de laquelle la fixation (11, 12, 12') est appliquée pour le montage de l'enjoliveur (1), la fixation comportant une bague de support (11) fixée sur l'enjoliveur de roue (1) au moyen d'étriers de retenue (12, 12') répartis sur la périphérie et dont le diamètre peut être modifié lors de la fixation de l'enjoliveur de roue (1), caractérisée en ce que la bague de support (11) est conformée en un anneau (11) ouvert et écartable qui, dans sa position de serrage, est appliqué contre la paroi (10a, 10b) de la gorge (10) de la corne de jante et peut être verrouillé par une serrure (29) de façon à empêcher une diminution de diamètre (compression) involontaire, la dite serrure comprenant un verrou de sûreté (26) qui s'engage dans l'ouverture (19) entre deux extrémités (20) de la bague de support (11) et présente au moins une surface oblique (27) coopérant avec les extrémités (20) de la bague de support (11).

2. Fixation selon la revendication 1, caractérisée en ce que la bague de support (11) est montée de manière mobile dans une attache (18) conformée de préférence en douille ou en œillet et disposée sur l'étrier de retenue (12, 12').

3. Fixation selon l'une des revendications 1 ou 2, caractérisée en ce que les extrémités (20) de la bague de support (11) sont placées de manière mobile dans l'attache (18) d'un étrier (12') monté sur l'enjoliveur de roue (1), l'étrier pouvant être pivoté autour d'un palier pivotant (22) situé sur l'enjoliveur de roue (1).

4. Enjoliveur de roue selon la revendication 3, caractérisé en ce que le palier pivotant (22) de l'étrier de retenue (12') est constitué par l'appui d'une partie terminale (15) de l'étrier de retenue (12') sur un épaulement (16) de la paroi (5) de l'enjoliveur de roue.

5. Fixation selon l'une des revendications 1 à 4, caractérisée en ce que l'étrier de retenue (12') est soutenu par un ressort (28).

6. Fixation selon l'une des revendications 3 à 5, caractérisée en ce que l'attache (18) est disposée à l'extrémité de l'étrier de retenue mobile (12') qui est opposée au palier pivotant (22).

7. Fixation selon l'une des revendications 1 à 6, caractérisée en ce que l'étrier de retenue mobile (12') peut être desserré ou bloqué au moyen d'un élément de fixation (14'), de préférence une vis.

8. Fixation selon l'une des revendications 1 à 7, caractérisée en ce que le verrou de sûreté (26) est prévu sur un collier (25) fixé sur la paroi (5) de l'enjoliveur de roue.

9. Fixation selon l'une des revendications 1 à 8, caractérisée en ce que le verrou de sûrteté est conformé en coin.

10. Fixation selon l'une des revendications 5 à 9, caractérisée en ce que le ressort (28) est disposé entre le collier (25) et l'étrier de retenue pivotant (12') et traversé par l'élément de fixation (14') lequel coopère avec un filetage de l'étrier de retenue (12').

11. Fixation selon l'une des revendications 1 à 10, caractérisée en ce que la bague de support (11) présente un diamètre sensiblement égal ou inférieure au bord extérieure (6) de l'enjoliveur de roue et qu'elle se situe en avant ou sensiblement dans le plan de celui-ci.

12. Fixation selon l'une des revendications 1 à 11, caractérisée en ce que la bague de support (11) comporte une gaine de protection (30) conformée de préférence en tuyau.

13. Fixation selon l'une des revendications 1 à 12, caractérisée par une conformation de la fixation (11, 12, 12') dans laquelle l'enjoliveur de roue (1) réalisé en matière plastique ou en tôle mince est renforcé, dans une position de blocage, dans la gorge (10) de la corne de jante de façon à empêcher des déformations élastiques.

Fig. 1

Fig. 2

EP 0 271 038 B1

Fig. 3

Fig. 4

Fig. 5